# EUROPEAN PATENT APPLICATION

(11) **EP 4 629 168 A1**
(43) Date of publication of application: **08.10.2025**
(21) Application number: 23897163.4
(22) Date of filing: 29.08.2023
(51) Int. Cl.: G06T 7/00, G06T 7/10, G06V 10/774

(54) **TRAINING DEVICE, TRAINING METHOD, AND TRAINING PROGRAM**

(30) Priority: 30.11.2022 JP 2022191298
(71) Applicant: Resonac Corporation, Tokyo 105-7325 (JP)
(72) Inventor: OKUNO, Katsuki, Tokyo 105-8518 (JP); OKANO, Yu, Tokyo 105-8518 (JP); MATSUZAWA, Mitsuharu, Tokyo 105-8518 (JP); TOMISAKA, Katsuhiko, Tokyo 105-8518 (JP); ICHIMURA, Takayuki, Tokyo 105-8518 (JP); IWASAKI, Naoya, Tokyo 105-8518 (JP)
(74) Representative: Strehl & Partner mbB
(86) International application number: PCT/JP2023/031112
(87) International publication number: WO 2024/116503

(57) **Abstract**

A work load of a worker when generating training data is reduced. A training device includes a training unit configured to perform a training process by using training data including image data included in a default image data group and ground truth data in a case where the image data included in the default image data group is subjected to segmentation processing, to generate a trained model; a collection unit configured to collect an xth output image data group output by inputting an xth image data group among a plurality of image data groups into an (x-1)th-order trained model; and a generation unit configured to generate xth-order training data by acquiring a processed xth output image data group in which each piece of output image data included in the collected xth output image data group is processed into ground truth data, and adding the processed xth output image data group to (x-1)th-order training data. The training unit performs a training process by using the xth-order training data to generate an xth-order trained model.

## Description

### TECHNICAL FIELD

The present disclosure relates to a training device, a training method, and a training program.

### BACKGROUND

As "object detection processing" for detecting an object from image data, object detection processing for various tasks has been proposed previously. Among them, "instance segmentation processing" performs a task of assigning a class label to an object to be detected in image data at a pixel level.

Here, in order to realize high processing accuracy in the instance segmentation processing, it is necessary to prepare multiple pieces of training data in which a class label at a pixel level is accurately assigned to an object to be detected.

### Related Art Document

### Patent Document

[Patent Document 1] Japanese Patent Application Laid-Open No. 2019-101535

### SUMMARY OF THE INVENTION

### Problem to be solved by the invention

With respect to the above, a work load of a worker is high to manually generate such training data.

The present disclosure aims to reduce a work load of a worker when generating training data.

### Means for Solving Problem

A training device according to a first aspect of the present disclosure includes:
a training unit configured to perform a training process by using training data including image data included in a default image data group and ground truth data in a case where the image data included in the default image data group is subjected to segmentation processing, to generate a trained model;
a collection unit configured to collect an xth output image data group output by inputting an xth (1 ≤ x ≤ N, where N is an integer of 2 or greater) image data group among a plurality of image data groups into an (x-1)th-order trained model; and
a generation unit configured to generate xth-order training data by acquiring a processed xth output image data group in which output image data included in the collected xth output image data group is processed into ground truth data, and adding the processed xth output image data group to (x-1)th-order training data,
wherein the training unit performs a training process by using the xth-order training data to generate an xth-order trained model.

A second aspect of the present disclosure is the training device as described in the first aspect further including a storage unit configured to store the Nth-order training data generated by the generation unit.

A third aspect of the present disclosure is the training device as described in the first or second aspect, wherein a number of pieces of the image data included in the xth image data group is greater than a number of pieces of the image data included in the default image data group.

A fourth aspect of the present disclosure is the training device as described in any one of the first to third aspects, wherein a number of pieces of the image data included in the (x+1)th image data group is greater than a number of pieces of the image data included in the xth image data group.

A fifth aspect of the present disclosure is the training device as described in any one of the first to fourth aspects, wherein the ground truth data includes image data in which a class label of a normal microparticle is assigned to a pixel and image data in which a class label of an aggregated microparticle is assigned to a pixel.

A sixth aspect of the present disclosure is a training method of performing, by a computer of a training device, a process comprising:
a step of performing a training process by using training data including image data included in a default image data group and ground truth data in a case where the image data included in the default image data group is subjected to segmentation processing, to generate a trained model;
a step of collecting an xth output image data group output by inputting an xth (1 ≤ x ≤ N, where N is an integer of 2 or greater) image data group among a plurality of image data groups into an (x-1)th-order trained model;
a step of generating xth-order training data by acquiring a processed xth output image data group in which each piece of output image data included in the collected xth output image data group is processed into ground truth data, and adding the processed xth output image data group to (x-1)th-order training data; and
a step of performing a training process by using the xth-order training data to generate an xth-order trained model.

A seventh aspect of the present disclosure is a training program causing a computer of a training device to perform a process comprising:
a step of performing a training process by using training data including image data included in a default image data group and ground truth data in a case where the image data included in the default image data group is subjected to segmentation processing, to generate a trained model;
a step of collecting an xth output image data group output by inputting an xth (1 ≤ x ≤ N, where N is an integer of 2 or greater) image data group among a plurality of image data groups into an (x-1)th-order trained model;
a step of generating xth-order training data by acquiring a processed xth output image data group in which each piece of output image data included in the collected xth output image data group is processed into ground truth data, and adding the processed xth output image data group to (x-1)th-order training data; and
a step of performing a training process by using the xth-order training data to generate an xth-order trained model.

### Effect of the invention

According to the present disclosure, a work load of a worker when generating training data can be reduced.

### BRIEF DESCRIPTION OF THE DRAWINGS

[FIG. 1] FIG. 1 is a diagram illustrating an example of a system configuration of a training system including a training device according to a first embodiment.
[FIG. 2] FIG. 2 is a drawing for explaining a method of generating ground truth data in instance segmentation processing.
[FIG. 3] FIG. 3 is a diagram illustrating an example of a hardware configuration of the training device according to the first embodiment.
[FIG. 4] FIG. 4 is a diagram illustrating an example of a functional configuration of the training device according to the first embodiment.
[FIG. 5] FIG. 5 is a drawing illustrating an example of an image data group.
[FIG. 6] FIG. 6 is a first diagram illustrating an application example of the training device according to the first embodiment.
[FIG. 7] FIG. 7 is a drawing illustrating an example of input data and ground truth data of training data.
[FIG. 8] FIG. 8 is a second diagram illustrating an application example of the training device according to the first embodiment.
[FIG. 9] FIG. 9 is a drawing illustrating an example of input data and ground truth data of first additional training data.
[FIG. 10] FIG. 10 is a third diagram illustrating an application example of the training device according to the first embodiment.
[FIG. 11] FIG. 11 is a drawing illustrating an example of input data and ground truth data of Nth additional training data.
[FIG. 12] FIG. 12 is a drawing illustrating a result of the instance segmentation processing using an Nth-order trained segmentation model.
[FIG. 13] FIG. 13 is a flowchart illustrating a flow of a training process and a training data generation process by the training system.
[FIG. 14] FIG. 14 is a diagram illustrating an example of a functional configuration of a training device according to a second embodiment.

### DESCRIPTION OF EMBODIMENTS

In the following, embodiments will be described with reference to the accompanying drawings. Here, in the present specification and drawings, components having substantially the same functional configuration are indicated by the same reference symbols, and duplicated description thereof will be omitted.

### [First Embodiment]

### <System Configuration of Training System>

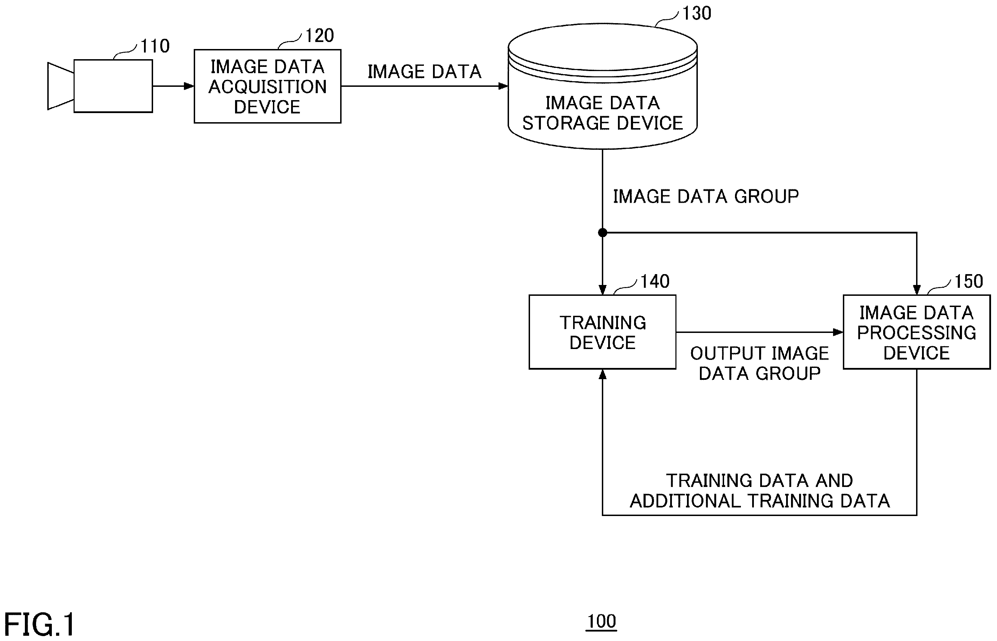

First, a system configuration of an entire training system including a training device according to a first embodiment will be described. FIG. 1 is a diagram illustrating an example of the system configuration of the training system including the training device according to the first embodiment. As illustrated in FIG. 1, a training system 100 includes an imaging device 110, an image data acquisition device 120, an image data storage device 130, a training device 140, and an image data processing device 150.

The imaging device 110 captures an image of a target object and transmits the captured image data to the image data acquisition device 120. As the imaging device 110, a digital camera, an optical microscope, a scanning electron microscope (SEM), a transmission electron microscope (TEM), or the like can be used depending on the size of the target object.

The image data acquisition device 120 divides the image data captured by the imaging device 110, classifies the multiple pieces of divided image data into multiple image data groups, and stores them in the image data storage device 130. The number of divisions of the image data is adjusted in accordance with, for example, the processing capacity of the training device 140 and the image data processing device 150.

Here, among the multiple image data groups stored in the image data storage device 130, each piece of image data included in a zeroth image data group (referred to as a default image data group) is transmitted to the image data processing device 150.

The training device 140 acquires training data from the image data processing device 150 in response to each piece of image data included in the default image data group being transmitted to the image data processing device 150. The training data includes the image data included in the default image data group and ground truth data in a case where the image data is subjected to the instance segmentation processing. Additionally, the training device 140 performs a training process by using training data including the acquired image data and the acquired ground truth data, to generate a trained instance segmentation model. Here, the training device 140 may be configured such that instead of generating the trained instance segmentation model by using the default image data group, a subsequent training process is performed using an existing trained instance segmentation model on which a training process has been performed using an appropriate training image data group.

Additionally, the training device 140 reads each piece of image data included in a first image data group other than the default image data group among the multiple image data groups stored in the image data storage device 130. Additionally, the training device 140 transmits output image data that is output by inputting each piece of the read image data into the trained instance segmentation model, to the image data processing device 150 as a first output image data group.

Additionally, in response to the first output image data group being transmitted, the training device 140 acquires first additional training data from the image data processing device 150. The first additional training data includes the image data included in the first image data group and processed output image data (ground truth data) in which output image data included in the first output image data group has been processed. Additionally, the training device 140 generates first-order training data by adding the first additional training data to the training data (here, training data generated based on the default image data group is also referred to as zeroth-order training data). Furthermore, the training device 140 performs a training process by using the first-order training data to generate a first-order trained instance segmentation model.

Here, the training device 140 repeats the above process N times (N is an integer of 2 or greater). Specifically, the training device 140 reads each piece of image data included in an xth image data group other than the default image data group among the multiple image data groups stored in the image data storage device 130 (1 ≤ x ≤ N). Additionally, the training device 140 transmits output image data that is output by inputting each piece of the read image data into the (x-1)th trained instance segmentation model, to the image data processing device 150 as an xth output image data group.

Additionally, in response to the xth output image data group being transmitted, the training device 140 acquires xth additional training data from the image data processing device 150. The xth additional training data includes the image data included in the xth image data group and processed output image data (ground truth data) in which image data included in the xth output image data group is processed. Additionally, the training device 140 generates xth-order training data by adding the xth additional training data to (x-1)th order training data. Furthermore, the training device 140 performs a training process by using the xth-order training data to generate an xth-order trained instance segmentation model.

When the default image data group is transmitted, the image data processing device 150 generates ground truth data in a case where, based on each piece of image data included in the image data group, the image data is subjected to the instance segmentation processing. Further, the image data processing device 150 respectively associates the generated ground truth data with the image data, and transmits them to the training device 140 as the training data.

Additionally, when the first image data group and the first output image data group are transmitted, the image data processing device 150 processes each piece of output image data included in the first output image data group into ground truth data. Additionally, the image data processing device 150 respectively associates the output image data (the ground truth data) included in the processed first output image data group with the image data included in the first image data group, and transmits them to the training device 140 as the first additional training data.

Additionally, when the xth image data group and the xth output image data group are transmitted, the image data processing device 150 processes each piece of output image data included in the xth output image data group into ground truth data. Additionally, the image data processing device 150 respectively associates the output image data (the ground truth data) included in the processed xth output image data group with the image data included in the xth image data group, and transmits them to the training device 140 as the xth additional training data.

### <Method of Generating Ground Truth Data of Instance Segmentation Process>

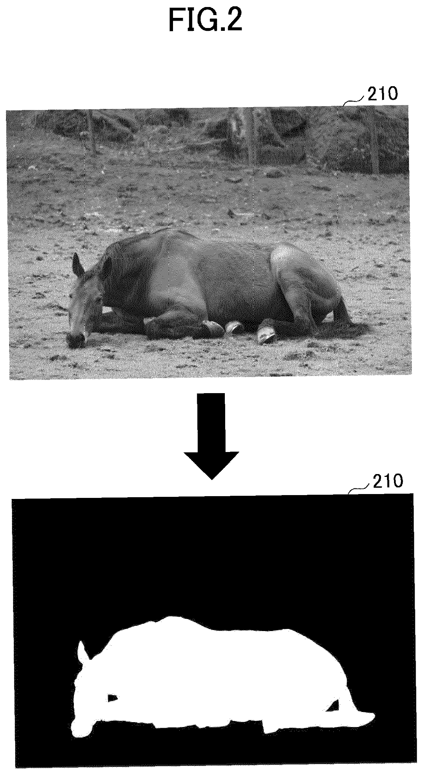

Next, a general method of generating the ground truth data of the instance segmentation processing will be described. FIG. 2 is a diagram for explaining the method of generating the ground truth data of the instance segmentation processing.

In FIG. 2, image data 210 is an example of image data used as input data of the training data in the instance segmentation processing. Additionally, image data 220 is an example of image data used as ground truth data of the training data in the instance segmentation processing. As illustrated in FIG. 2, in order to generate the ground truth data of the training data, it is necessary to assign a class label to all pixels corresponding to an object in the image data 210. In the case of the image data 210 illustrated in FIG. 2, in order to assign a class label to detect a horse, it is necessary to appropriately select a pixel outline corresponding to the horse and assign a class label. Therefore, when multiple pieces of the training data for the instance segmentation processing are to be prepared, a huge amount of time is required, and a work load of a worker is high.

In contrast, the training device 140 according to the first embodiment is configured to perform the training process and the instance segmentation processing in combination as described above, and generate the ground truth data of the training data by:
- generating the default image data group from scratch; and
- generating the first and subsequent image data groups by processing each piece of output image data included in the output image data group, instead of generating the image data groups from scratch.

This can reduce the work load of the worker when generating the training data.

### <Hardware Configuration of Training Device>

Next, a hardware configuration of each device (the image data acquisition device 120, the training device 140, and the image data processing device 150) included in the training system 100 will be described. Here, the hardware configuration of each device included in the training system 100 is substantially the same, and therefore the hardware configuration of the training device 140 will be described here.

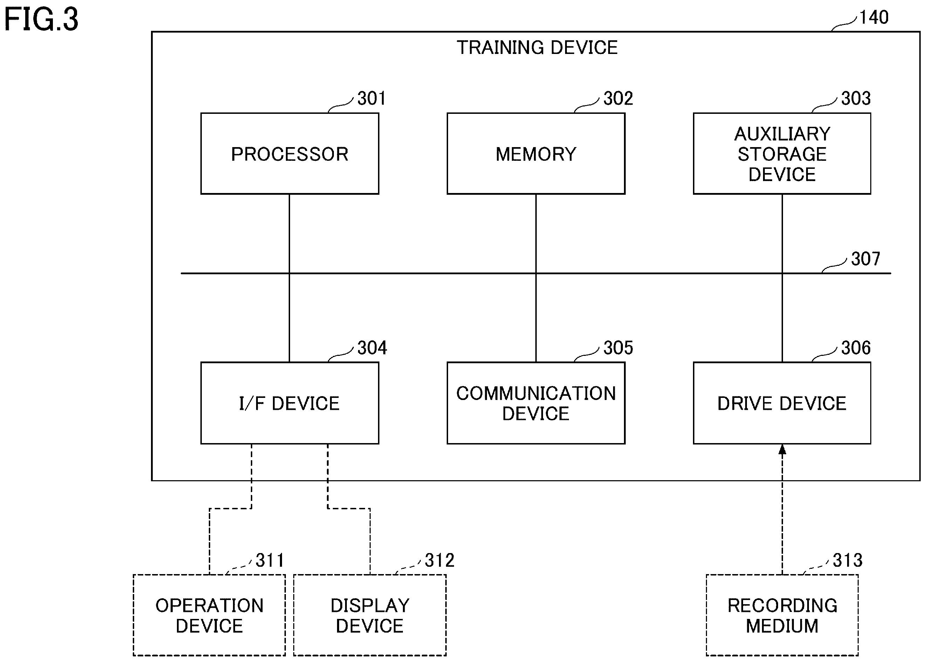

FIG. 3 is a diagram illustrating an example of the hardware configuration of the training device according to the first embodiment. As illustrated in FIG. 3, the training device 140 includes a processor 301, a memory 302, an auxiliary storage device 303, an interface (I/F) device 304, a communication device 305, and a drive device 306. The hardware components of the training device 140 are connected to each other via a bus 307.

The processor 301 includes various arithmetic devices, such as a central processing unit (CPU) and a graphics processing unit (GPU). The processor 301 reads various programs (for example, a training program) onto the memory 302 and executes the programs.

The memory 302 includes a main storage device, such as a read only memory (ROM) and a random access memory (RAM). The processor 301 and the memory 302 form what is called a computer, and by the processor 301 executing various programs read on the memory 302, the computer realizes various functions.

The auxiliary storage device 303 stores various programs and various data used when the various programs are executed by the processor 301.

The I/F device 304 is a connection device that connects to an operation device 311 and a display device 312, which are examples of a user interface device. The communication device 305 is a communication device for communicating with an external device (not illustrated) via a network.

The drive device 306 is a device for a recording medium 313 being set. The recording medium 313 includes a medium for optically, electrically, or magnetically recording information, such as a CD-ROM, a flexible disk, or a magnetooptical disk. Additionally, the recording medium 313 may include a semiconductor memory or the like that electrically records information, such as a ROM or a flash memory.

Here, the various programs to be installed in the auxiliary storage device 303 are installed by, for example, the distributed recording medium 313 being set in the drive device 306 and the various programs recorded in the recording medium 313 being read by the drive device 306. Alternatively, the various programs to be installed in the auxiliary storage device 303 may be installed by being downloaded from a network via the communication device 305.

### <Functional Configuration of Training Device>

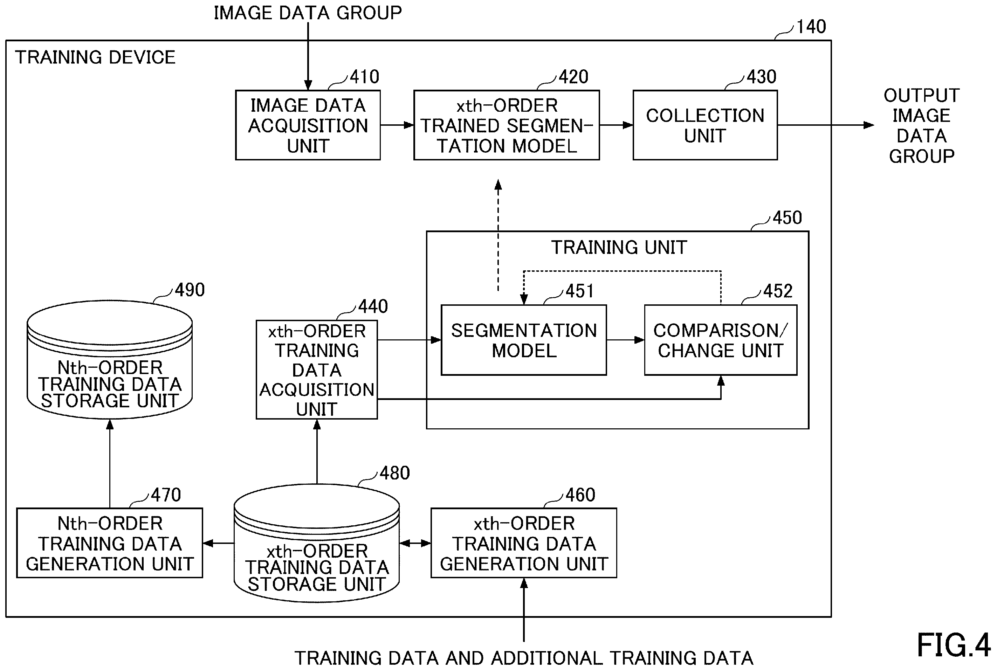

Next, a functional configuration of the training device 140 will be described. FIG. 4 is a diagram illustrating an example of the functional configuration of the training device according to the first embodiment. As described above, the training program is installed in the training device 140, and by executing the training program, the training device 140 functions as:
- an image data acquisition unit 410;
- an xth-order trained segmentation model 420;
- a collection unit 430;
- an xth-order training data acquisition unit 440;
- a training unit 450;
- an xth-order training data generation unit 460; and
- an Nth-order training data generation unit 470.

When the xth image data group is transmitted from the image data storage device 130, the image data acquisition unit 410 inputs each piece of the image data included in the xth image data group into the xth-order trained segmentation model 420.

The xth-order trained segmentation model 420 is a Region Based Convolutional Neural Networks or Regions with CNN features (R-CNN) base model, and is generated by the training unit 450, which will be described later, performing a training process. Here, the R-CNN is an example, and a model such as a Mask R-CNN, YOLACT, or SOLO, or a derivative model of these models may be used as the xth-order trained segmentation model 420.

The xth-order trained segmentation model 420 performs the instance segmentation processing on each piece of the image data included in the xth image data group input by the image data acquisition unit 410.

Further, the xth-order trained segmentation model 420 outputs the output image data by performing the instance segmentation processing, and notifies the collection unit 430 of the output image data.

The collection unit 430 collects each piece of output image data output from the xth-order trained segmentation model, and transmits the collected output image data to the image data processing device 150 as an xth output image data group.

When the xth-order training data generation unit 460 receives:
- each piece of the image data included in the default image data group; and
- the ground truth data when each piece of the image data is subjected to the instance segmentation processing,
as the training data, from the image data processing device 150, the received training data is stored in the xth-order training data storage unit 480.

Additionally, when the xth-order training data generation unit 460 receives:
- each piece of the image data included in the xth image data group; and
- processed output image data (ground truth data) obtained by processing each piece of the output image data included in the xth output image data group,
as the xth additional training data from the image data processing device 150, the image data and the ground truth data are added to the (x-1)th-order training data already stored in the xth-order training data storage unit 480 to generate the xth-order training data.

The xth-order training data acquisition unit 440 reads the training data stored in the xth-order training data storage unit 480 and inputs the training data into the training unit 450. Additionally, every time the xth-order training data is stored in the xth-order training data storage unit 480, the xth-order training data acquisition unit 440 reads the xth-order training data and inputs the xth-order training data into the training unit 450.

The training unit 450 includes a segmentation model 451 and a comparison/change unit 452, and inputs "input data" of the training data or the xth-order training data input by the xth-order training data acquisition unit 440 into the segmentation model 451. Additionally, the training unit 450 inputs "ground truth data" of the training data or the xth-order training data input by the xth-order training data acquisition unit 440 into the comparison/change unit 452.

The segmentation model 451 is a Region Based Convolutional Neural Networks or Regions with CNN features (R-CNN) base model. Here, the R-CNN is an example, and a model such as a Mask R-CNN, YOLACT, or SOLO, or a derivative model of these models may be used as the xth-order trained segmentation model 420.

In response to each piece of the image data included in the "input data" of the training data or the xth-order training data being input, the segmentation model 451 performs the instance segmentation processing to output the output image data.

The comparison/change unit 452 updates model parameters of the segmentation model 451 based on the output image data output from the segmentation model 451 and the ground truth data included in the "ground truth data" of the training data or the xth-order training data.

As described, the training unit 450 performs the training processes using the training data and the xth-order training data, to generate the trained segmentation model or the xth-order trained segmentation model. Here, the trained segmentation model and the xth-order trained segmentation model generated by the training unit 450 function as the xth-order trained segmentation model 420. For example, the trained segmentation model generated by the training unit 450 functions as a zeroth-order trained segmentation model. Additionally, the first-order trained segmentation model generated by the training unit 450 functions as a first-order trained segmentation model.

The Nth-order training data generation unit 470 reads, from the xth-order training data storage unit 480, Nth-order training data, which is stored in the xth-order training data storage unit 480 by adding the Nth additional training data thereto, and stores the Nth-order training data in the Nth-order training data storage unit 490.

### <Specific Example of Image Data Group>

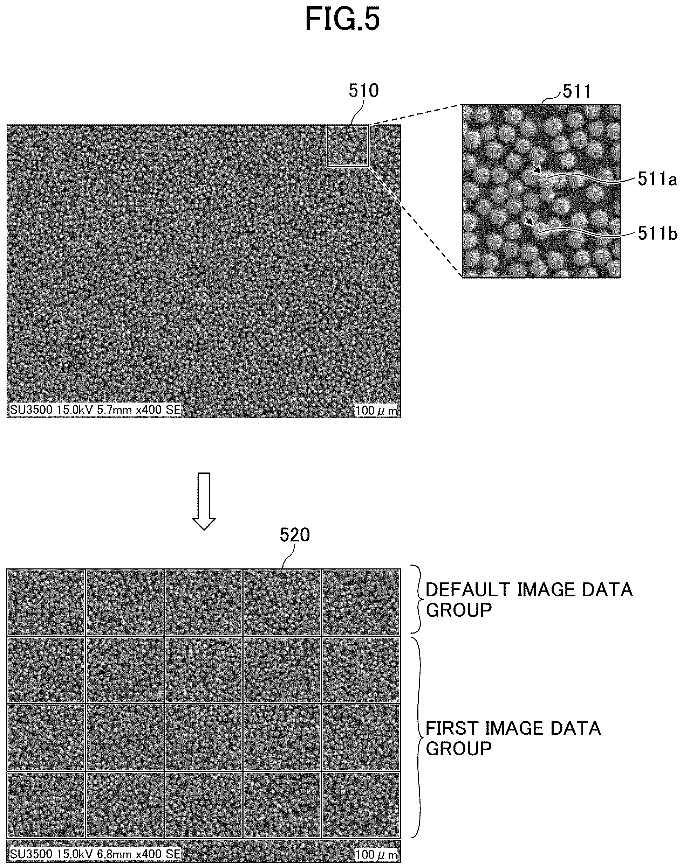

Next, a specific example of an image data group generated by the image data acquisition device 120 will be described. FIG. 5 is a drawing illustrating an example of the image data group. In FIG. 5, the reference symbol 510 indicates one piece of image data captured by the imaging device 110 and acquired by the image data acquisition device 120.

Additionally, the reference symbol 511 indicates an enlarged view of a part of the image data indicated by the reference symbol 510. As indicated by the reference symbol 511, the target object to be captured in the present embodiment is a microparticle group. By performing the instance segmentation processing on the image data captured by imaging the microparticle group, individual microparticles are identified, and normal microparticles (normal particles) and aggregated microparticles (aggregated particles) are determined. Here, in the enlarged view indicated by the reference symbol 511, the reference symbols 511a and 511b indicate aggregated particles, and the other microparticles are normal particles.

Here, as the microparticles targeted by the present disclosure, particles having a diameter of the order of microns are exemplified as illustrated in FIG. 5. The upper limit of the average particle diameter of the microparticles is 50 µm or less, preferably 30 µm or less, and more preferably 20 µm or less. The lower limit of the average particle diameter of the microparticles is 1.0 µm or more, preferably 2.0 µm or more, and more preferably 2.5 µm or more. The substance constituting the microparticles may be an inorganic material containing a metal or the like, or an organic material. A functional layer for exhibiting a specific function may be formed on the surface of the microparticle.

In FIG. 5, the reference symbol 520 indicates a state in which the image data acquisition device 120 divides the image data into multiple pieces of image data and classifies the multiple pieces of divided image data into multiple image data groups. Specifically, the reference symbol 520 indicates a state in which the image data indicated by the reference symbol 510 is divided into 20 to generate 20 pieces of image data. Additionally, the reference symbol 520 indicates a state in which five pieces of image data located in the first row among the 20 pieces of image data are classified into the default image data group. Further, the reference symbol 520 indicates a state in which 15 pieces of image data located in the second to fourth rows among the 20 pieces of image data are classified into the first image data group.

Here, in the present embodiment, each piece of the image data in the second to tenth images, which are not illustrated in FIG. 5, is similarly divided into 20 to generate 180 pieces of image data, and the 180 pieces of image data are classified into the second image data group.

### <Application Example (1) of Training Device>

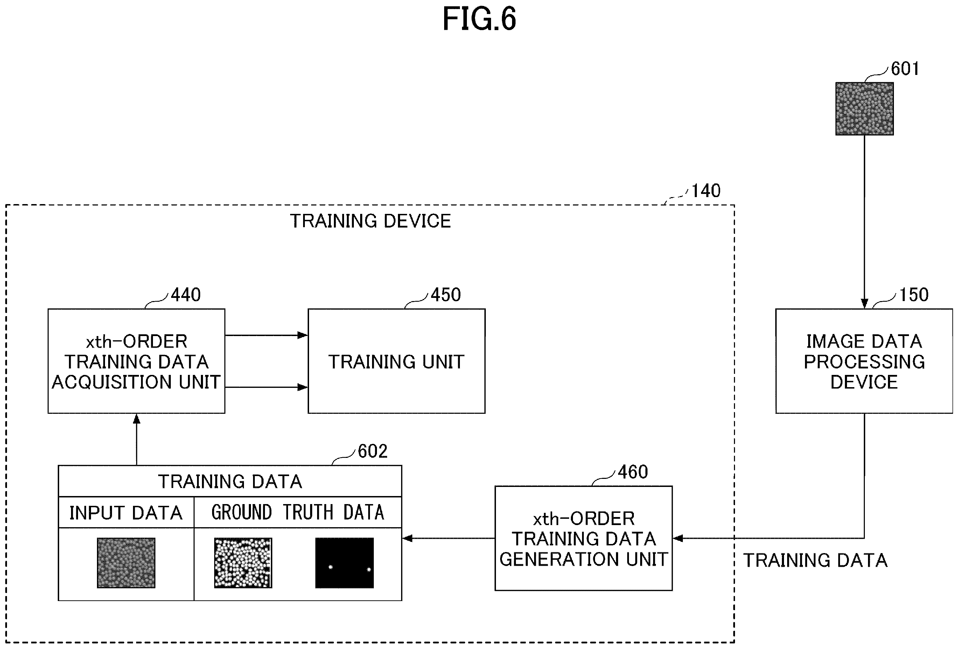

Next, an application example of the training device 140 (until the trained segmentation model is generated) will be described. FIG. 6 is a first diagram illustrating an application example of the training device according to the first embodiment. As illustrated in FIG. 6, when image data 601 included in the default image data group is transmitted to the image data processing device 150, the image data processing device 150 generates:
- normal image data obtained by assigning a normal class label to normal particles of the image data 601; and
- aggregation image data obtained by assigning an aggregation class label to aggregated particles of the image data 601.

The image data processing device 150 generates training data including:
- the image data 601 as the input data; and
- the normal image data and the aggregation image data as the ground truth data,
and transmits the training data to the training device 140.

The training data transmitted from the image data processing device 150 is acquired by the xth-order training data generation unit 460 and stored in the xth-order training data storage unit 480 as training data 602. Here, in the example of FIG. 6, for the convenience of space, only one set of the input data and the ground truth data is illustrated as the training data 602, but the training data 602 includes five sets of input data and ground truth data, which correspond to the number of pieces of the image data included in the default image data group.

The five sets of input data and ground truth data included in the training data 602 are read by the xth-order training data acquisition unit 440 and sequentially input into the training unit 450, thereby performing the training process and generating the trained segmentation model.

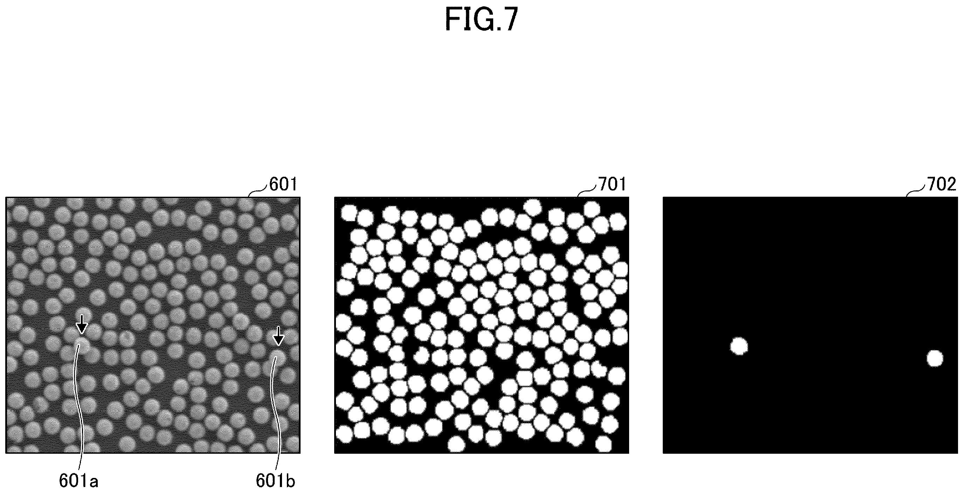

FIG. 7 is a drawing illustrating an example of the input data and the ground truth data of the training data, and illustrates one set of input data and ground truth data of the training data 602 illustrated in FIG. 6 in an enlarged manner. In FIG. 7, the image data 601 is the input data of the training data 602, and the reference symbols 601a and 601b indicate aggregated particles. Additionally, normal image data 701 and aggregation image data 702 are the ground truth data of the training data 602.

### <Application Example (2) of Training Device>

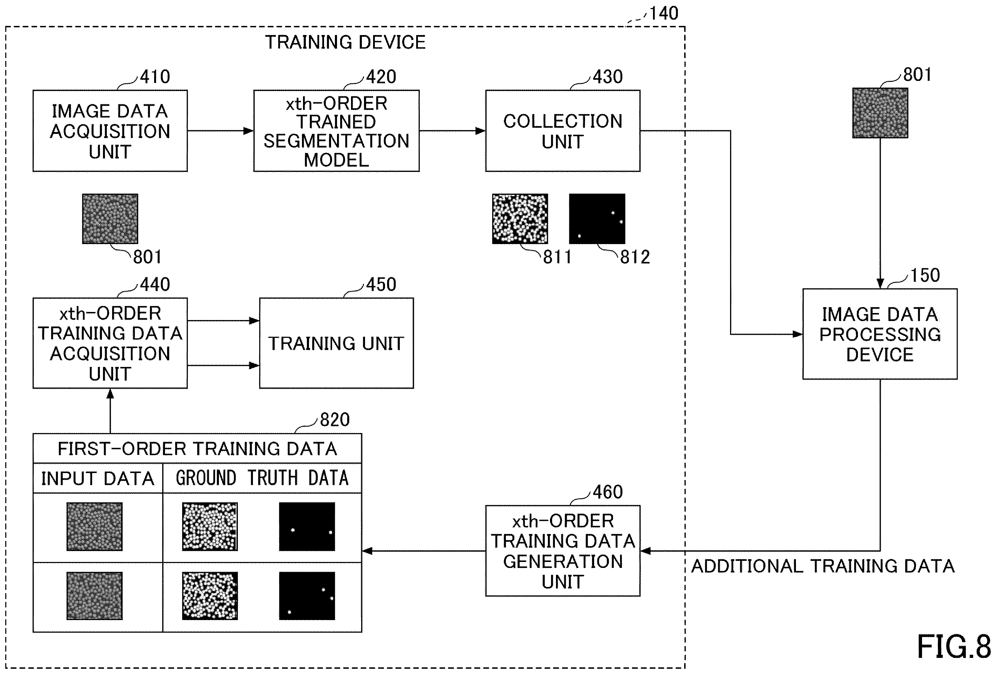

Next, an application example of the training device 140 (until the first-order trained segmentation model is generated) will be described. FIG. 8 is a second diagram illustrating the application example of the training device according to the first embodiment. As illustrated in FIG. 8, the image data acquisition unit 410 acquires image data 801 included in the first image data group, and inputs it into the xth-order trained segmentation model 420 functioning as the zeroth-order trained segmentation model. With this, the xth-order trained segmentation model 420 outputs output image data 811 and 812.

Here, in the example of FIG. 8, for the convenience of space, only the image data 801 is illustrated among the image data included in the first image data group, but the first image data group includes, for example, 15 pieces of image data. Therefore, the collection unit 430 collects 15 sets of output image data as the first output image data group and transmits them to the image data processing device 150.

Additionally, as illustrated in FIG. 8, when the image data 801 included in the first image data group is transmitted to the image data processing device 150, the image data processing device 150 performs the following processing.
- With respect to a microparticle in the output image data 811 included in the first output image data group, when a normal class label is not assigned to a pixel corresponding to a normal particle, a normal class label is assigned. Additionally, when a normal class label is assigned to a pixel corresponding to a microparticle other than a normal particle, the normal class label is deleted. With this, the output image data 811 is processed into the normal image data.
- With respect to a microparticle in the output image data 812 included in the first output image data group, when an aggregation class label is not assigned to a pixel corresponding to an aggregated particle, an aggregation class label is assigned. Additionally, when an aggregation class label is assigned to a pixel corresponding to a microparticle other than an aggregated particle, the aggregation class label is deleted. With this, the output image data 812 is processed into the aggregation image data.

Additionally, the image data processing device 150 transmits, to the training device 140, the first additional training data including:
- the image data 801 as input data; and
- the normal image data and aggregation image data obtained by processing the output image data 811 and 812 as ground truth data.

The first additional training data transmitted from the image data processing device 150 is acquired by the xth-order training data generation unit 460 and is added to the training data 602, so that first-order training data 820 is generated and stored in the xth-order training data storage unit 480. Here, in the example of FIG. 8, for the convenience of space, as each of the training data and the first additional training data, only one set of input data and ground truth data is illustrated. However, the training data includes five sets of input data and ground truth data, and the first additional training data includes 15 sets of input data and ground truth data. That is, the first-order training data 820 includes a total of 20 sets of input data and ground truth data.

The 20 sets of input data and ground truth data included in the first-order training data 820 are read by the xth-order training data acquisition unit 440 and sequentially input into the training unit 450, thereby performing the training process and generating the first-order trained segmentation model.

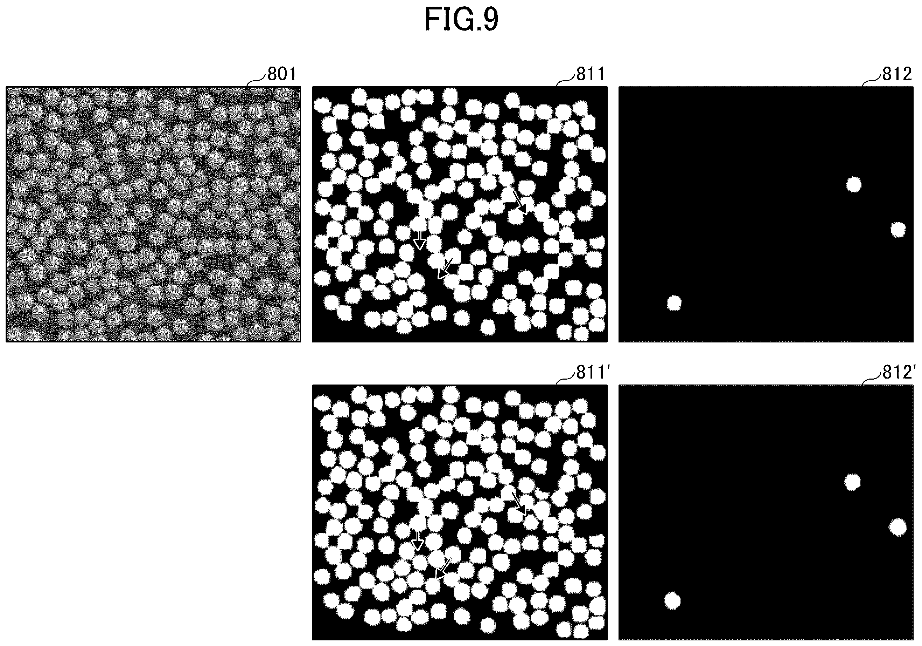

FIG. 9 is a drawing illustrating an example of the input data and the ground truth data of the first additional training data. In FIG. 9, the image data 801 is input data of the first additional training data. Additionally, in FIG. 9, normal image data 811' and aggregation image data 812' are the ground truth data of the first additional training data.

Here, in the example of FIG. 9, the normal image data 811' is generated by performing processing of assigning a normal class label to a microparticle in which a normal class label is not assigned to a pixel corresponding to a normal particle in the output image data 811 included in the first output image data group. Here, in the output image data 811, the microparticles indicated by the black arrows indicate the microparticles in which the normal class label is not assigned to the pixel corresponding to the normal particle. Additionally, in the example of FIG. 9, the aggregation image data 812' is obtained by using the output image data 812 as it is without being processed.

As described, in the first embodiment, when the first additional training data is generated, the normal image data 811' and the aggregation image data 812' are obtained by processing the output image data 811 and 812. With this, the work load of the operator when generating the training data can be reduced, in comparison with a case where the normal image data 811' and the aggregation image data 812' are generated from scratch based on the image data 801.

### <Application Example (3) of Training Device>

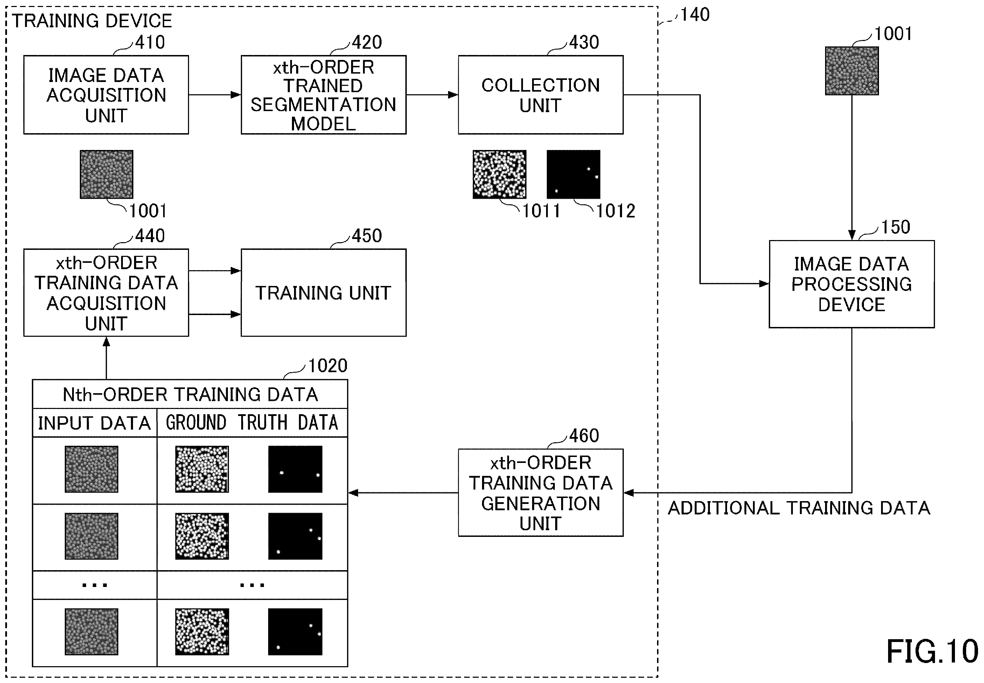

Next, an application example of the training device 140 (until an Nth-order trained segmentation model is generated) will be described. FIG. 10 is a third diagram illustrating an application example of the training device according to the first embodiment. Here, the following description assumes N = 2.

As illustrated in FIG. 10, the image data acquisition unit 410 acquires image data 1001 included in the Nth image data group and inputs it into the xth-order trained segmentation model 420, which functions as the (N-1)th-order trained segmentation model. With this, the xth-order trained segmentation model 420 outputs output image data 1011 and 1012.

Here, in the example of FIG. 10, for the convenience of space, only the image data 1001 is illustrated among the image data included in the Nth image data group, but the Nth image data group includes, for example, 180 pieces of image data. Therefore, the collection unit 430 collects 180 sets of output image data as the Nth output image data group and transmits them to the image data processing device 150.

Additionally, as illustrated in FIG. 10, when the image data 1001 included in the Nth image data group is transmitted to the image data processing device 150, the image data processing device 150 performs the following processing.
- With respect to a microparticle in the output image data 1011 included in the Nth output image data group, when a normal class label is not assigned to a pixel corresponding to a normal particle, a normal class label is assigned. Additionally, when a normal class label is assigned to a pixel corresponding to a microparticle other than a normal particle, the normal class label is deleted. With this, the output image data 1011 is processed into the normal image data.
- With respect to a microparticle in the output image data 1012 included in the Nth output image data group, when an aggregation class label is not assigned to a pixel corresponding to an aggregated particle, an aggregation class label is assigned. Additionally, when an aggregation class label is assigned to a pixel corresponding to a microparticle other than an aggregated particle, the aggregation class label is deleted. With this, the output image data 1012 is processed into the aggregation image data.

Additionally, the image data processing device 150 transmits, to the training device 140, the Nth additional training data including:
- the image data 1001 as input data; and
- the normal image data and the aggregation image data obtained by processing the output image data 1011 and 1012 as ground truth data.

The Nth additional training data transmitted from the image data processing device 150 is acquired by the xth-order training data generation unit 460, and is added to the (N-1)th-order training data, so that the Nth-order training data 1020 is generated and stored in the xth-order training data storage unit 480. Here, in the example of FIG. 10, for the convenience of space, two sets of input data and ground truth data are illustrated as the (N-1)th-order training data, and only one set of input data and ground truth data is illustrated as the Nth additional training data. However, the (N-1)th-order training data includes 20 sets of input data and ground truth data, and the Nth additional training data includes 180 sets of input data and ground truth data. That is, the Nth-order training data 1020 includes a total of 200 sets of input data and ground truth data.

The 200 sets of input data and ground truth data included in the Nth-order training data 1020 are read by the xth-order training data acquisition unit 440 and sequentially input into the training unit 450, thereby performing a training process and generating a trained segmentation model.

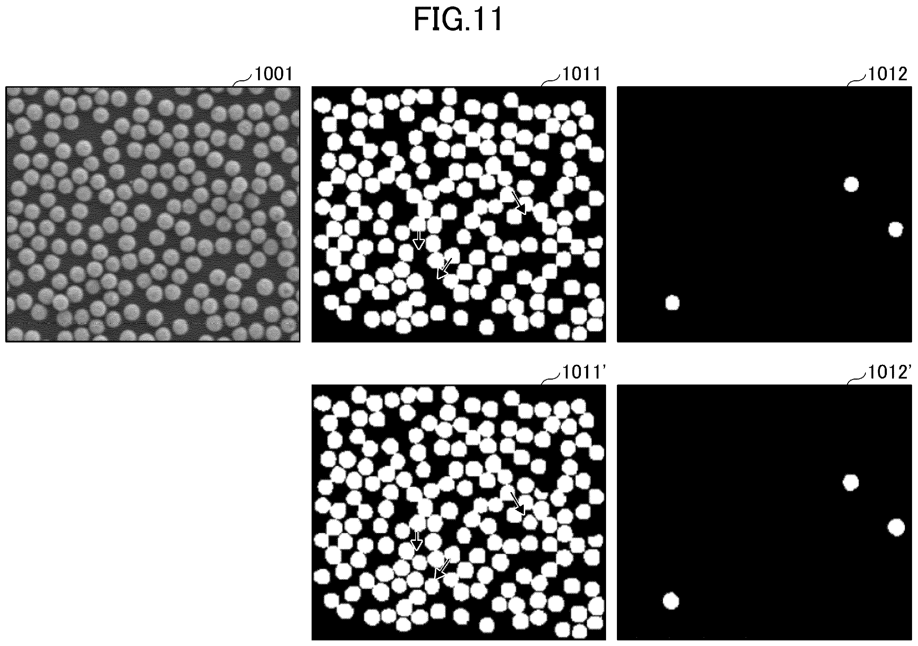

FIG. 11 is a drawing illustrating an example of the input data and the ground truth data of the Nth additional training data. In FIG. 11, the image data 1001 is the input data of the Nth additional training data. Additionally, in FIG. 11, normal image data 1011' and aggregation image data 1012' are the ground truth data of the Nth additional training data.

Here, in the example of FIG. 11, the normal image data 1011' is generated by performing processing of assigning a normal class label to a microparticle in which a normal class label is not assigned to a pixel corresponding to a normal particle in the output image data 1011 included in the Nth output image data group. Here, in the output image data 1011, the microparticles indicated by the black arrows indicate the microparticles in which the normal class label is not assigned to the pixel corresponding to the normal particle. Additionally, in the example of FIG. 11, aggregation image data 1012' indicates a state in which the output image data 1012 included in the Nth output image data group is used as it is without being processed.

As described, in the first embodiment, when generating the Nth additional training data, the normal image data 1011' and the aggregation image data 1012' are obtained by processing the output image data 1011 and 1012. With this, the work load of the operator when generating the training data can be reduced, in comparison with a case where the normal image data 1011' and the aggregation image data 1012' are generated from scratch based on the image data 1001.

Here, the output image data processed to generate the (x+1)th additional training data requires a smaller amount of processing than the output image data processed to generate the xth additional training data. This is because the number of data used for the training process increases and the processing accuracy of the xth-order trained instance segmentation model is improved.

### <Result of Instance Segmentation Processing>

Next, a result of the instance segmentation processing by the Nth-order trained segmentation model generated by performing the training process on the segmentation model 451 by using the Nth-order training data will be described.

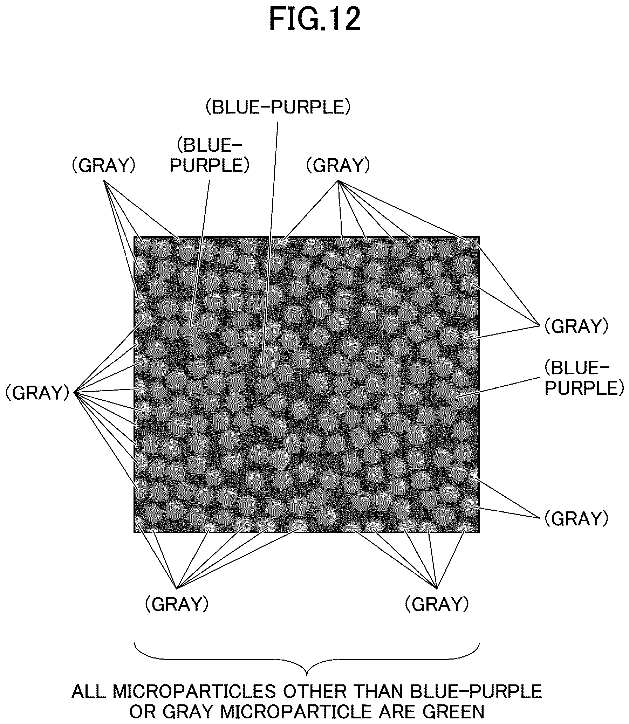

FIG. 12 is a drawing illustrating the result of the instance segmentation processing by the Nth-order trained segmentation model. As illustrated in FIG. 12, as a result of the improvement in the processing accuracy by performing the training process using the Nth-order training data, according to the Nth-order trained segmentation model:
- a normal class label can be appropriately assigned to a pixel corresponding to a normal particle among the microparticles included in the input image data (green in FIG. 12); and
- an aggregation class label can be appropriately assigned to a pixel corresponding to an aggregated particle among the microparticles included in the input image data (blue-purple in FIG. 12).

### <Flow of Training Process and Training Data Generation Process>

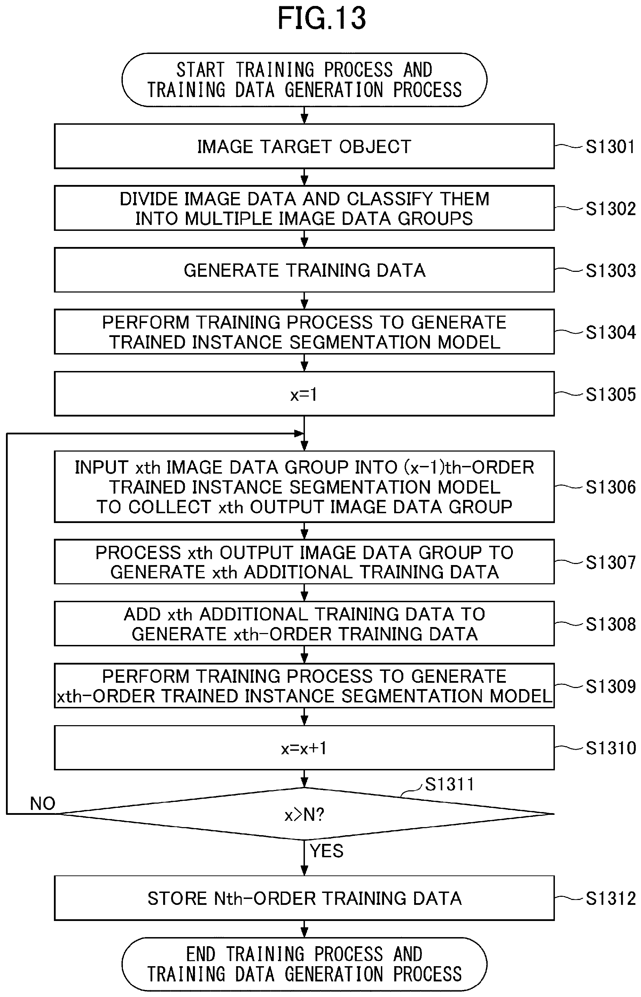

Next, a flow of the training process and the training data generation process by the training system 100 will be described. FIG. 13 is a flowchart illustrating the flow of the training process and the training data generation process by the training system.

In step S1301, the imaging device 110 images the microparticle group, which is the target object, and generates multiple pieces of image data.

In step S1302, the image data acquisition device 120 divides the image into multiple pieces, classifies them into the image data groups, and stores them in the image data storage device 130.

In step S1303, the image data processing device 150 acquires the default image data group transmitted from the image data storage device 130. Additionally, the image data processing device 150 generates the training data including each piece of the image data included in the image data group as the input data and the normal image data and the aggregation image data generated based on each piece of the image data included in the image data group as the ground truth data.

In step S1304, the training device 140 performs the training process by using the training data to generate the trained instance segmentation model.

In step S1305, the training device 140 substitutes "1" for x.

In step S1306, the training device 140 inputs the xth image data group into the (x-1)th-order trained instance segmentation model, and collects the xth output image data.

In step S1307, the image data processing device 150 processes each piece of the output image data included in the xth output image data group, and generates the processed xth output image data group including the processed output image data. Additionally, the image data processing device 150 generates the xth additional training data including the image data included in the xth image data group as the input data and the processed output image data included in the processed xth output image data group as the ground truth data.

In step S1308, the training device 140 adds the xth additional training data to the (x-1)th-order training data to generate the xth-order training data.

In step S1309, the training device 140 performs the training process by using the xth-order training data to generate the xth-order trained instance segmentation model.

In step S1310, the training device 140 increments x.

In step S1311, the training device 140 determines whether x exceeds N. When it is determined in step S1311 that x does not exceed N (NO in step S1311), the process returns to step S1306.

In step S1311, when it is determined that x exceeds N (YES in step S1311), the process proceeds to step S1312.

In step S1312, the training device 140 stores the Nth-order training data in the Nth-order training data storage unit 490.

### <Conclusion>

As is clear from the above description, the training device 140 according to the first embodiment performs the following processing.
- The training process is performed using the training data including the image data included in the default image data group and the ground truth data in the case where each piece of the image data included in the default image data group is subjected to the instance segmentation processing. This generates the (x-1)th-order trained instance segmentation model.
- The xth output image data group output by inputting the xth image data group among the multiple image data groups into the (x-1)th-order trained instance segmentation model is collected.
- The xth-order training data is generated by acquiring the processed xth output image data group, in which each piece of output image data included in the collected xth output image data group is processed into the ground truth data, and adding it to the (x-1)th-order training data.
- The training process is performed using the xth-order training data to generate the xth-order trained instance segmentation model.

As described above, the training device 140 according to the first embodiment is configured to perform the training process and the instance segmentation processing in combination, and generates the ground truth data of the training data by processing each piece of output image data instead of generating the ground truth data from scratch.

With this, according to the first embodiment, the work load of the worker when generating the training data can be reduced.

Additionally, in the training device 140 according to the first embodiment, when the training process is performed using the xth-order training data, the training process can be performed from scratch by using the segmentation model prepared first every time, instead of performing an additional retraining process on the (x-1)th-order trained instance segmentation model.

By generating the training data and generating the Nth-order trained instance segmentation model in such a way, the training device 140 according to the first embodiment can avoid a biased training process that occurs due to a small amount of training data.

### [Second Embodiment]

In the first embodiment described above, the image data acquisition device 120 and the image data processing device 150 are configured separately from the training device 140. However, the function of the image data acquisition device 120 and the function of the image data processing device 150 may be realized in the training device 140.

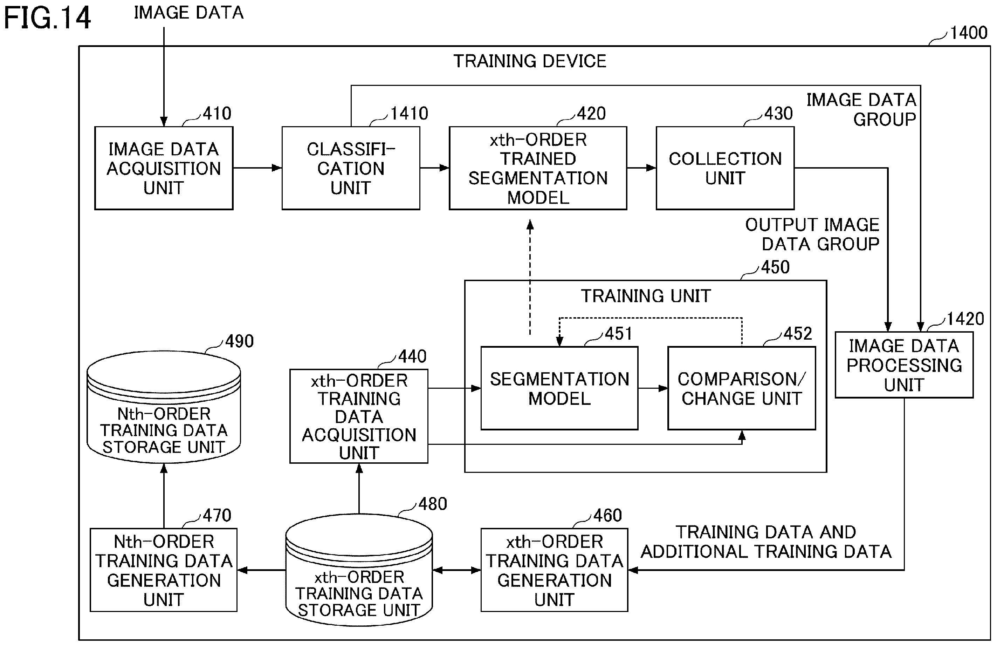

FIG. 14 is a diagram illustrating an example of a functional configuration of a training device according to the second embodiment. The difference from the functional configuration of the training device 140 according to the first embodiment illustrated in FIG. 4 is that a training device 1400 includes a classification unit 1410 and an image data processing unit 1420.

The classification unit 1410 divides multiple image data captured by the imaging device 110 and acquired by the image data acquisition unit 410. Additionally, the classification unit 1410 classifies the multiple pieces of divided image data into multiple image data groups.

Additionally, the classification unit 1410 notifies the image data processing unit 1420 of the default image data group among the multiple image data groups. Additionally, the classification unit 1410 notifies the image data processing unit 1420 of the xth image data group and inputs the xth image data group into the xth-order trained segmentation model 420 every time the xth-order trained segmentation model 420 is updated.

When the default image data group is provided as notification from the classification unit 1410, the image data processing unit 1420 generates ground truth data in a case where each piece of the image data included in the image data group is subjected to the instance segmentation processing. Additionally, the image data processing unit 1420 respectively associates the generated ground truth data with the image data, and notifies the xth-order training data generation unit 460 of the image data and the ground truth data as the training data.

Additionally, when the xth image data group is provided as notification from the classification unit 1410 and the xth output image data group is provided as notification from the collection unit 430, the image data processing unit 1420 processes each piece of the output image data included in the xth output image data group into the ground truth data.

Further, the image data processing unit 1420 associates the output image data (the ground truth data) included in the processed xth output image data group with the image data included in the xth image data group, and notifies the xth-order training data generation unit 460 of the image data and the output image data as the xth additional training data.

As described, by realizing the function of the image data acquisition device 120 and the function of the image data processing device 150 in the training device 1400, according to the second embodiment, substantially the same effects as those of the first embodiment can be obtained.

Here, in the above description, both the function of the image data acquisition device 120 and the function of the image data processing device 150 are realized in the training device 1400. However, either the function of the image data acquisition device 120 or the function of the image data processing device 150 may be realized in the training device 1400.

### [Other Embodiments]

In the above-described embodiments, the details of the processing method for processing each piece of the output image data included in the xth output image data group have not been described. However, when each piece of the output image data included in the xth output image data group is processed, for example, the embodiments may be configured such that a difference between the image data included in the xth image data group and the output image data included in the xth output image data group is calculated to specify the microparticles to be processed, and then the output image data is processed.

Additionally, in the above-described embodiments, the details of the classification method for classifying the multiple pieces of divided image data into the multiple image data groups have not been described. However, when classifying the multiple pieces of divided image data into the multiple image data groups, for example,
- the multiple pieces of divided image data are classified so that the number of pieces of the image data included in the xth image data group is greater than the number of pieces of the image data included in the default image data group, and
- the multiple pieces of divided image data are classified so that the number of pieces of the image data included in the (x+1)th image data group is greater than the number of pieces of the image data included in the xth image data group.

The number of microparticles for which a class label is to be assigned to pixels in order to generate the ground truth data from each piece of the image data included in the default image data group is great. With respect to the above, the number of microparticles for which a class label is to be assigned or to be deleted in order to process each piece of the output image data included in the xth output image data group into ground truth data is few.

Additionally, in the case of each piece of output image data included in the (x+1)th output image data group, the number of microparticles for which a class label is to be assigned to pixels or to be deleted in order to process it into the ground truth data is less than that in the output image data included in the xth output image data group.

That is, even if the number of pieces of the image data in the xth image data group is greater than that in the default image data group, the number of microparticles for which a class label is to be assigned to pixels or deleted does not increase, and the work load of the worker does not increase. Similarly, even if the number of pieces of the image data in the (x+1)th image data group is greater than that in the xth image data group, the number of microparticles for which a class label is to be assigned to pixels or to be deleted does not increase, and the work load of the worker does not increase. Therefore, by adopting the classification method as described above, a large number of ground truth data can be accumulated without increasing the work load of the worker.

Additionally, in the above embodiments, the description assumes that the target object is a microparticle having a diameter of the micron order. However, the size of the target object may be on the submicron order or on the millimeter order.

Additionally, in the above embodiments, the segmentation model 451 is described as a model for performing the instance segmentation processing, but may be a model for performing segmentation processing other than the instance segmentation processing.

Additionally, In the above-described embodiments, an example of use of the Nth-order trained segmentation model generated by the training device 140 has not been described. However, the Nth-order trained segmentation model is used, for example, in a process of determining whether a particle is a normal particle or an aggregated particle. At this time, a result of the determination by the Nth-order trained segmentation model may be used to control manufacturing conditions of a device for manufacturing the microparticle.

Here, the present invention is not limited to the configurations described herein, such as the configurations described in the embodiments, combinations with other elements, and the like. These points can be changed without departing from the scope of the present invention, and can be appropriately determined according to the application form thereof.

This application claims priority to Japanese Patent Application No. 2022-191298 filed on November 30, 2022, the entire contents of which are incorporated herein by reference.

### Description of reference symbols

- 100:: training system

- 110:: imaging device
- 120:: image data acquisition device
- 140:: training device
- 150:: image data processing device
- 410:: image data acquisition unit
- 420:: xth-order trained segmentation model
- 430:: collection unit
- 440:: xth-order training data acquisition unit
- 450:: training unit
- 460:: xth-order training data generation unit
- 470:: Nth-order training data generation unit
- 1400:: training device
- 1410:: classification unit
- 1420:: image data processing unit

## Claims

1. A training device comprising:
a training unit configured to perform a training process by using training data including image data included in a default image data group and ground truth data in a case where the image data included in the default image data group is subjected to segmentation processing, to generate a trained model;
a collection unit configured to collect an xth output image data group output by inputting an xth (1 ≤ x ≤ N, where N is an integer of 2 or greater) image data group among a plurality of image data groups into an (x-1)th-order trained model; and
a generation unit configured to generate xth-order training data by acquiring a processed xth output image data group in which each piece of output image data included in the collected xth output image data group is processed into ground truth data, and adding the processed xth output image data group to (x-1)th-order training data,
wherein the training unit performs a training process by using the xth-order training data to generate an xth-order trained model.

2. The training device as claimed in claim 1, further comprising a storage unit configured to store the Nth-order training data generated by the generation unit.

3. The training device as claimed in claim 1 or 2, wherein a number of pieces of the image data included in the xth image data group is greater than a number of pieces of the image data included in the default image data group.

4. The training device as claimed in any one of claims 1 to 3, wherein a number of pieces of the image data included in the (x+1)th image data group is greater than a number of pieces of the image data included in the xth image data group.

5. The training device as claimed in any one of claims 1 to 4, wherein the ground truth data includes image data in which a class label of a normal microparticle is assigned to a pixel and image data in which a class label of an aggregated microparticle is assigned to a pixel.

6. A training method of performing, by a computer of a training device, a process comprising:
a step of performing a training process by using training data including image data included in a default image data group and ground truth data in a case where the image data included in the default image data group is subjected to segmentation processing, to generate a trained model;
a step of collecting an xth output image data group output by inputting an xth (1 ≤ x ≤ N, where N is an integer of 2 or greater) image data group among a plurality of image data groups into an (x-1)th-order trained model;
a step of generating xth-order training data by acquiring a processed xth output image data group in which each piece of output image data included in the collected xth output image data group is processed into ground truth data, and adding the processed xth output image data group to (x-1)th-order training data; and
a step of performing a training process by using the xth-order training data to generate an xth-order trained model.

7. A training program causing a computer of a training device to perform a process comprising:
a step of performing a training process by using training data including image data included in a default image data group and ground truth data in a case where the image data included in the default image data group is subjected to segmentation processing, to generate a trained model;
a step of collecting an xth output image data group output by inputting an xth (1 ≤ x ≤ N, where N is an integer of 2 or greater) image data group among a plurality of image data groups into an (x-1)th-order trained model;
a step of generating xth-order training data by acquiring a processed xth output image data group in which each piece of output image data included in the collected xth output image data group is processed into ground truth data, and adding the processed xth output image data group to (x-1)th-order training data; and
a step of performing a training process by using the xth-order training data to generate an xth-order trained model.
